(19) Europäisches Patentamt
European Patent Office
Office européen des brevets

(11) **EP 3 785 006 B1**

(12) **FASCICULE DE BREVET EUROPEEN**

(45) Date de publication et mention
de la délivrance du brevet:
**24.11.2021 Bulletin 2021/47**

(21) Numéro de dépôt: **19728478.9**

(22) Date de dépôt: **19.04.2019**

(51) Int Cl.:
***G01M 13/028*** *(2019.01)*

(86) Numéro de dépôt international:
**PCT/FR2019/050945**

(87) Numéro de publication internationale:
**WO 2019/207242 (31.10.2019 Gazette 2019/44)**

(54) **PROCÉDÉ ET DISPOSITIF DE SURVEILLANCE D'UN SYSTÈME À ENGRENAGES**

VERFAHREN UND VORRICHTUNG ZUR ÜBERWACHUNG EINES GETRIEBESYSTEMS

METHOD AND DEVICE FOR MONITORING A GEAR SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.04.2018 FR 1853561**

(43) Date de publication de la demande:
**03.03.2021 Bulletin 2021/09**

(73) Titulaire: **SAFRAN
75015 Paris (FR)**

(72) Inventeurs:
• **ABBOUD, Dany
77550 Moissy-Cramayel (FR)**
• **EL BADAOUI, Mohamed
77550 Moissy-Cramayel (FR)**
• **MARNISSI, Yosra
77550 Moissy-Cramayel (FR)**

(74) Mandataire: **Regimbeau
20, rue de Chazelles
75847 Paris Cedex 17 (FR)**

(56) Documents cités:
**EP-A1- 2 963 408 WO-A1-03/006935**

• **R. B. Randall: "Machine Diagnostics using
Advanced Signal Processing", , 26 septembre
2011 (2011-09-26), XP055538786, Extrait de
l'Internet:
URL:https://www.phmsociety.org/sites/phmso
ciety.org/files/Tutorial%20Diagnostics%20R
andall.pdf [extrait le 2019-01-07]**

**Description**

DOMAINE TECHNIQUE GENERAL

L'invention concerne le domaine de la détection des défauts mécaniques dans des engrenages par analyse des signaux vibratoires générés par ces derniers et trouve avantageusement application dans la détection de tels défauts dans les moteurs d'avions ou d'hélicoptères pour la surveillance de tels systèmes.

ETAT DE LA TECHNIQUE

Un engrenage est un système mécanique composé d'au moins deux roues dentées engrenées servant à la transmission du mouvement de rotation entre elles.
Les vibrations émises par un tel engrenage portent des informations utiles sur son état de santé. Par conséquent, leur analyse est un moyen de surveillance efficace, non-intrusif et à faible coût.
En effet, d'un point de vue « signal », les vibrations mesurées d'un engrenage simple fonctionnant en régime (quasi)-constant peuvent être modélisées comme un produit de multiplication d'un signal d'engrènement $s_e(t)$ avec deux signaux modulants $s_1(t)$ et $s_2(t)$. Cela s'exprime de la manière suivante :

$$s(t) = s_e(t)\big(1 + s_1(t) + s_2(t)\big)$$

avec :

- $s_e(t)$ : Le signal d'engrènement périodique par rapport à la période d'engrènement $T_e = 1/f_e$
- $s_1(t)$ : Le signal modulant de la roue 1 périodique par rapport à la période de rotation $T_1 = 1/f_1$
- $s_2(t)$ : le signal modulant de la roue 2 étant périodique par rapport à la période de rotation $T_2 = 1/f_2$

On désigne par $Z_1$ et $Z_2$ les nombres de dents des roues 1 et 2, respectivement. Les fréquences $f_e$, $f_1$ et $f_2$ sont liées entre eux selon l'équation suivante :

$$f_e = Z_1 f_1 = Z_2 f_2$$

La fréquence $f_e$ est la fréquence d'engrènement, $f_1$ et $f_2$ sont les fréquences de rotation des roues 1 et 2 respectivement.
Le signal $s_e(t)$ représente physiquement la réponse de la force d'engrènement générée lors de contact entre les dents, ainsi la période d'engrènement désigne la durée entre l'entrée en contact d'une dent et sa sortie du contact.
Le signal modulant d'intérêt $s_l(t)$ ($l$ = 1,2), représente physiquement la non-régularité de l'engrènement causée par la roue $l$.
Idéalement, $s_l(t)$ est une constante pour une roue parfaite (c'est-à-dire sans anomalie mais pouvant présenter une faible irrégularité). Cependant, en pratique, la présence de la non-régularité est commune et n'implique pas nécessairement la présence d'un défaut. En effet, la non-régularité peut être due à des erreurs légères de fabrication, de montage ou d'asymétrie. Pour cette raison, l'information sur l'état de santé de la roue $l$ dépend de la forme du signal $s_l(t)$.
Par exemple, si le signal $s_l(t)$ présente un train périodique avec des transitoires, cela indique la présence d'un défaut local (par exemple de type écaillage).
Un problème connu dans la détection des défauts dans les engrenages est que le signal d'engrènement est énergétiquement beaucoup plus fort que les signaux modulants et ce même en présence d'un défaut sur une des roues.
Par conséquent, la signature du défaut est souvent masquée par le phénomène d'engrènement.
Une méthode classique pour détecter un défaut, est de surveiller l'évolution des modulations autour des fréquences d'engrènement dans le spectre du signal (en dB).
Toutefois, cette méthode classique a pour inconvénient d'être souvent imprécise car elle ne fournit pas d'information sur la forme du signal modulant.
Une autre méthode classique est de démoduler (en amplitude et en fréquence) dans une bande centrée sur une harmonique d'engrènement.
Cette méthode a pour but de restaurer une image de l'enveloppe (ou de la phase) du signal modulant ($s_l(t)$) mais présente des performances médiocres dans le cas où d'autres interférences (interférences périodiques, bruit stationnaire coloré) interviennent, ce qui est un scénario typique dans les systèmes complexes.
D'autres méthodes de séparation de source peuvent restaurer une image des signaux modulants d'une manière efficace, mais exigeant un coût de calcul élevé.

EP2963408 divulgue un procédé de surveillance d'un système à engrenages comprenant au moins deux roues, chaque roue ayant une fréquence caractéristique, un signal vibratoire, ou acoustique représentatif de ces vibrations ayant été acquis par un capteur , un signal numérique vibratoire ou acoustique x(t) ayant été obtenu, le procédé comprenant, pour chaque fréquence caractéristique du système, les étapes de filtrage, au moyen d'un filtre, du signal numérique de manière à obtenir un signal de surveillance image d'au moins une composante vibratoire d'au moins un défaut; détermination de l'enveloppe carré dudit signal de surveillance, défini par la valeur absolue au carré de la transformée de Hilbert du signal de surveillance de manière à extraire une image des signaux modulants associés à la rotation des roues à partir du signal de surveillance. WO03006935 divulgue une méthode de surveillance d'une machine mettant en œuvre une moyenne synchrone. R. B. Randall: "Machine Diagnostics using Advanced Signal Processing", 26 septembre 2011 (2011-09-26) divulgue une méthode de surveillance d'une machine mettant en œuvre la moyenne carrée afin de réduire le bruit dans le cadre de l'analyse d'un signal vibratoire mettant en œuvre une transformée de Hilbert.

PRESENTATION DE L'INVENTION

Un but de l'invention est de proposer une méthode de surveillance d'un système à engrenages qui soit simple à mettre en oeuvre et qui soit efficace.

A cet effet, l'invention propose un procédé de surveillance d'un système à engrenages comprenant au moins deux roues, chaque roue ayant une fréquence caractéristique, un signal vibratoire, ou acoustique représentatif de ces vibrations ayant été acquis par un capteur, un signal numérique vibratoire ou acoustique $x(t)$ ayant été obtenu, le procédé comprenant, pour chaque fréquence caractéristique du système, les étapes de

filtrage, E1, au moyen d'un filtre, du signal numérique de manière à obtenir un signal de surveillance image d'au moins une composante vibratoire d'au moins un défaut ;

détermination, E3, de l'enveloppe carré dudit signal de surveillance, défini par la valeur absolue au carré de la transformée de Hilbert du signal de surveillance de manière à extraire une image des signaux modulants associés à la rotation des roues à partir du signal de surveillance ;

détermination, E4, de la moyenne synchrone de ladite enveloppe carrée par rapport à la période de rotation d'une roue d'intérêt choisie parmi les roues de l'engrenage, ladite moyenne permettant d'atténuer des composantes parasites dans l'enveloppe provenant d'autres sources mécaniques ;

détermination, E5, d'un indicateur de surveillance fonction de ladite moyenne synchrone, ledit indicateur de surveillance étant défini par la racine carrée de la moyenne synchrone normalisée par la valeur médiane de la moyenne synchrone.

S'agissant de l'étape E1, elle a pour but d'améliorer la forme de la modulation produite par la roue défectueuse en appliquant un filtre optimal. Par exemple, il est possible de calculer ce filtre à partir du kurtosis spectral

$$H(f) = \sqrt{KS_x(f)}$$

avec $KS_x(f)$ le kurtosis spectral définit comme :

$$KS_x(f) = \frac{\langle |X(n\Delta t; f)|^4 \rangle}{\langle |X(n\Delta t; f)|^2 \rangle^2} - 2$$

Ou $X(n\Delta t; f)$ est la transformée de Fourrier court terme de $x(t)$, $\Delta t$ est le résolution temporelle du spectrogramme, n l'indice de temps et $\langle * \rangle$ l'opérateur moyenne par rapport à n. D'autres filtre peuvent également être appliqués.

S'agissant de l'étape E3, Vue que l'information liée au défaut est porté par le signal modulant et non pas le signal d'engrènement, la détermination de l'enveloppe carré, E3, permet de mettre en évidence le signal modulant potentiellement du défaut) et compenser l'effet des engrènements.

S'agissant de l'étape E4, L'enveloppe carrée calculée a la même longueur du signal original et comprend des interférences asynchrones à la rotation de la roue d'intérêt qui s'ajoute sur le signal d'un cycle à un autre. Vu que la modulation d'une roue est par nature périodique, la moyenne des cycles (cad l'application de la moyenne synchrone) va conserver la modulation de la roue d'intérêt et rejeter toutes les interférences asynchrones provenant d'autres sources mécaniques ou électromagnétiques.

S'agissant de l'étape E5, elle permet l'obtention d'une image carrée (car l'enveloppe carrée est utilisée) de la modulation définie sur un cycle (ou une rotation ou une période) de la roue d'intérêt de la roue d'intérêt. Afin d'obtenir une image du signal modulant (qui représente physiquement la raideur de la surface des dents de la roue d'intérêt), on prend la racine carrée de cette dernière. La normalisation pas la valeur médiane permet de normaliser cet indicateur afin qu'il soit universel.

L'invention est avantageusement complétée par les caractéristiques suivantes, prises seules ou en une quelconque de leur combinaison techniquement possible.

Le procédé comprend une étape d'affichage en coordonnées polaires de l'indicateur ainsi obtenu, d'un indicateur signalant au moins un défaut dès lors qu'il varie autour d'un cercle unité.

Le procédé comprend une étape d'obtention d'un filtre à partir d'un kurtosis spectral sélectif défini par la partie du kurtosis spectral du signal numérique liée à ladite fréquence caractéristique.

De manière avantageuse, la détermination du kurtosis spectral sélectif du signal numérique, comprend les sous-étapes suivantes :

- détermination d'une transformée de Fourier à court terme du signal numérique définie par
$$X(i\Delta t; m\Delta f) DFT^{N_h}_{n\delta_t \to m\Delta f}\{h(n\delta_t - i\Delta t)x(n\delta_t)\}$$
$0 \leq m < S$ avec $\Delta t/\delta_t = N_h(1 - p)$ où $p$ désigne le taux de chevauchement de la fenêtre glissante et $S = T/\Delta t$ est la longueur numérique de la transformée de Fourier à court terme par rapport à la variable $i\Delta t$ et $T$ est la durée d'acquisition du signal ;

- normalisation, pour chaque fréquence $m\Delta f$, de la transformée de Fourier à court terme obtenue de la manière suivante
$$X_N(i\Delta t; m\Delta f) = \frac{X(i\Delta t; m\Delta f)}{\sigma_x(m\Delta f)}$$
, où $\sigma_x(m\Delta f) = \sqrt{\frac{1}{S}\sum_{n=0}^{S-1}|X(i\Delta t; m\Delta f)|^2}$ est l'écart-type de la Transformée de Fourier à court terme par rapport à la variable de temps à la fréquence $m\Delta f$.

- détermination pour chaque fréquence $m\Delta f$, de la transformée de Fourier discrète par rapport à un axe temporel
$$\Gamma_{2X}(a.\Delta\alpha; m\Delta f) = \frac{1}{S} DFT^S_{i\Delta t \to a.\Delta\alpha}\{|X_N(i\Delta t; m\Delta f)|^2\},$$

où $\Delta\alpha = \frac{1}{\Delta t.S}$ est la résolution fréquentielle par rapport à la fréquence secondaire $a\Delta\alpha$.

- détermination du kurtosis spectral sélectif au moyen de la fonctionnelle suivante :
$$KSS^{f1}_{4X}(m\Delta f) = \sum_{a=c.k} |\Gamma_{2X}(a\Delta\alpha; m\Delta f)|^2,$$

avec $c = 1,2,3 \ldots$ et tel que $c < S/2k - 1$,

L'étape d'obtention du filtre est définie par la racine carrée du kurtosis spectral sélectif de la manière suivante :
$$H_{f_I}(m\Delta f) = \sqrt{KSS^{f_I}_X(m\Delta f)}$$
avec $f_I$ la fréquence caractéristique considérée.

Le procédé comprend une étape d'obtention d'un filtre à partir du kurtosis spectral ou du kurtogram du signal numérique.

Le procédé comprend une étape de mesure et d'acquisition d'un signal vibratoire ou acoustique numérique $x(t)$, l'acquisition étant mise en oeuvre par un accéléromètre ou bien un microphone.

Le procédé comprend une étape de rééchantillonnage angulaire du signal numérique vibratoire ou acoustique.

L'invention concerne également un système de surveillance comprenant une unité de traitement configurée pour mettre en oeuvre un procédé selon l'invention, ledit système comprenant, de préférence, une unité de mesure et d'acquisition d'un signal numérique vibratoire $x(t)$, ladite unité de mesure d'acquisition comprenant un capteur de préférence un accéléromètre ou un microphone.

L'invention concerne également un produit programme d'ordinateur comprenant des instructions de code de programme pour l'exécution des étapes du procédé selon l'invention, lorsque ce procédé est exécuté par au moins un processeur.

Les avantages de l'invention sont multiples :

- L'indicateur utilisé est simple et intuitif. En effet l'invention propose un seul indicateur normalisé qui reflète directement l'état des dents de la roue surveillée et qui est conforme avec la physique de l'engrenage (contrairement aux autres approches qui calculent des indicateurs ponctuels de types statistiques ou énergétiques). Il permet non seulement de détecter la présence du défaut mais aussi d'avoir plus d'informations sur son type à savoir local ou distribué.
- Le procédé présente une robustesse aux bruits provenant des sources mécaniques, électriques ou électromagnétiques.
- L'invention présente une facilité d'implémentation et est rapide : toutes les transformations utilisées ont un temps de calcul très raisonnable et ne demandent pas beaucoup d'espace mémoire. Les opérations utilisées sont principalement des opérations d'additions, multiplications et des transformées de Fourrier qui peut être facilement implémentée par l'algorithme de transformée Fourrier rapide (en anglais « *Fast Fourrier Transform* » (FFT)).

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 illustre des étapes d'un procédé de surveillance selon l'invention ;
- la figure 2 illustre des sous-étapes d'une étape du procédé de surveillance selon l'invention ;
- la figure 3 illustre un affichage d'indicateurs de surveillance obtenus au cours d'un procédé de surveillance selon l'invention.

## DESCRIPTION DETAILLEE DE L'INVENTION

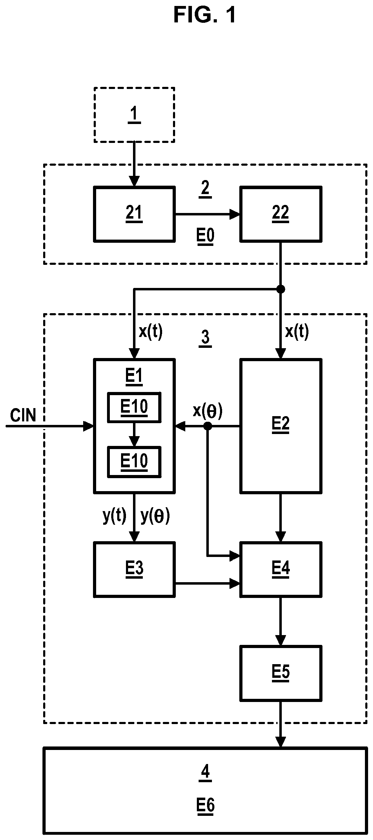

La **figure** 1 illustre un exemple d'implémentation d'un système et d'un procédé de surveillance selon l'invention.

Un système 1 comprenant au moins deux (2) engrenages (ou roues) est surveillé pour en détecter d'éventuels défauts mécaniques. Un tel système est présent dans un moteur d'aéronef, un moteur d'hélicoptère, une automobile, une éolienne etc.

Une unité 2 de mesure permet de mesurer et acquérir un signal vibratoire généré par le système 1 à engrenages lorsqu'il est en fonctionnement.

Une telle unité d'acquisition comprend un capteur 21 configuré pour mesurer le signal vibratoire. Le capteur 21 permet d'obtenir un signal analogique représentatif du signal vibratoire et est connecté à une chaine 22 d'acquisition configurée pour fournir un signal vibratoire numérique $x(t)$. Un capteur 21 est par exemple un microphone.

La chaine 22 d'acquisition comprend, à ce titre, un conditionneur (non représenté), un filtre analogique antirepliement (non représenté), un échantillonneur bloqueur (non représenté) et un convertisseur analogique numérique (non représenté). Les éléments de la chaine 22 d'acquisition sont bien connus de l'homme du métier et ne seront pas plus détaillés ici.

Le signal vibratoire numérique $x(t)$ obtenu est alors amené à une unité 3 de traitement qui est configurée pour mettre en oeuvre un procédé de surveillance du système à engrenages dans le but de le surveiller et d'en détecter d'éventuels défauts mécaniques. En particulier, comme cela sera détaillé dans ce qui suit, un signal de surveillance est obtenu permettant de déterminer des indicateurs de surveillance facilement exploitables.

L'unité 3 de traitement est notamment configurée pour mettre en oeuvre différentes étapes qui seront décrites ci-après.

L'unité 3 de traitement permet de communiquer à une unité 4 d'affichage des indicateurs de surveillance en vue de leur affichage, pour être visualisé par un opérateur notamment. L'unité d'affichage permet aussi d'afficher divers indicateurs générés à partir du signal de surveillance.

On décrit maintenant le procédé de surveillance.

Un signal numérique vibratoire $x(t) = x(n\delta_t)$ est acquis (étape E0) via l'unité 2 de mesure et d'acquisition. Ce signal numérique est la version numérique du signal analogique mesuré et acquis par le capteur 21 et la chaine 22 d'acquisition.

Le signal numérique $x(t)$ a une durée prédéfinie $T = L. \delta_t$ avec $\delta_t = 1/F_s$ est la période d'échantillonnage et L la longueur numérique du signal, pendant laquelle le système 1 fonctionne sous un régime stationnaire c'est-à-dire avec une vitesse et une charge quasi-constantes.

Cette condition de stationnarité est vérifiée si l'écart type du profile de vitesse $v(t)$ ne dépasse pas 5% de sa valeur moyenne :

$$\sqrt{\frac{1}{L}\sum_{n=0}^{L-1}\left(v(n\delta_t)-\frac{1}{L}\sum_{n=0}^{L-1}v(n\delta_t)\right)^2}\leq\frac{0,05}{L}\sum_{n=0}^{L-1}v(n\delta_t).$$

On considère que la cinématique CIN du système 1 à surveiller est connue afin de pouvoir calculer les fréquences caractéristiques de l'engrenage (fréquences $f_e$, $f_1$ et $f_2$ présentées en introduction par exemple pour un système à deux roues).

Le signal numérique va être filtré (étape E1) au moyen d'un filtre optimal afin d'obtenir une image du signal impulsif. Le signal ainsi filtré est un signal de surveillance.

De manière alternative une étape de rééchantillonnage angulaire (étape E2) peut être mise en œuvre sur le signal numérique acquis. Une telle étape a pour avantage de synchroniser le contenu cyclique à l'arbre du moteur. Le rééchantillonnage angulaire requiert toutefois la présence d'un signal tachymétrique, acquis conjointement avec $x(t)$, permettant d'approximer la vitesse et de transformer le signal dans le domaine angulaire ($x(\theta)$ où $\theta$ est la variable angulaire). Ainsi, dans cette variante c'est le signal dans le domaine angulaire qui est utilisé dans les étapes suivantes.

Revenons au filtrage (étape E1) du signal numérique. Cette étape de filtrage comprend notamment l'obtention d'un filtre optimal (étape E10). Un filtre optimal est par exemple un filtre de Wiener estimé au moyen d'un kurtosis spectral sélectif, du kurtosis spectral ou du kurtogram.

Cette étape est un filtrage de type passe-bande dans lequel le signal filtré présente une image de la composante vibratoire du défaut.

On entend par kurtosis spectral sélectif (noté KSS) la partie du kurtosis spectral liée à la fréquence caractéristique. La notion de sélectivité est liée au fait que le KSS est, autrement dit, une sélection d'une partie du KS habituellement calculé. Le KSS permet avantageusement de caractériser les transitoires liées à une fréquence caractéristique cible.

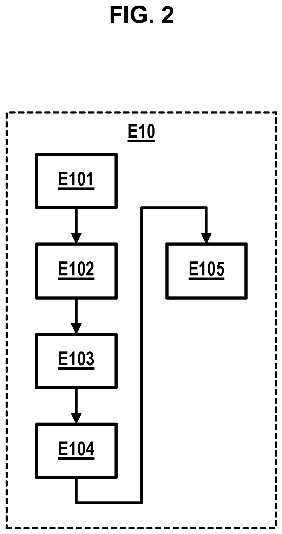

La **figure** 2 illustre les principales étapes permettant la détermination du filtre optimal (étape E10) de Wiener estimé au moyen du KSS selon un mode de réalisation préféré mais non limitatif. Le KSS pour une fréquence caractéristique $f_1$ est noté mathématiquement $KSS_{4X}^{f_1}(f)$.

Dans un premier temps, la transformée de Fourier à court terme (TFCT) est appliquée au signal numérique (étape E101).

La TFCT est calculée en appliquant une fenêtre glissante $\{h(n\delta_t)\}_{n=0}^{N_h-1}$ de longueur $N_h$ au signal numérique $x(t) = x(n.\delta_t)$. La TFCT est définie de la manière suivante :

$$X(i\Delta t; m\Delta f)=DFT_{n\delta_t\rightarrow m\Delta f}^{N_h}\{h(n\delta_t-i\Delta t)x(n\delta_t)\}\qquad 0\leq m<S$$

avec $\Delta t/\delta_t = N_h(1-p)$ où $p$ désigne le taux de chevauchement de la fenêtre glissante, $S = T/\Delta t$ désigne la longueur numérique de la TFCT par rapport à la variable $i\Delta t$ ($T$ désignant la durée d'acquisition du signal). La TFCT est une matrice de dimension $N_h$ par $S$ désignant respectivement l'axe de fréquence et du temps.

Ensuite, pour chaque fréquence $m\Delta f$, la TFCT est normalisée par l'écart type (étape E102), comme suit :

$$X_N(i\Delta t; m\Delta f)=\frac{X(i\Delta t;m\Delta f)}{\sigma_x(m\Delta f)},$$

où,

$$\sigma_x(\mathrm{m}\Delta f)=\sqrt{\frac{1}{S}\sum_{n=0}^{S-1}|X(i\Delta t;m\Delta f)|^2}$$

est l'écart-type de la TFCT par rapport à la variable de temps à la fréquence $m\Delta f$.

La transformée de Fourier discrète de $X_N(i\Delta t; m\Delta f)$ est ensuite calculée pour chaque fréquence $m\Delta f$, par rapport à l'axe de temps et est définie de la manière suivante (étape E103) :

$$\Gamma_{2X}(a.\,\Delta\alpha;\,m\Delta f) = \frac{1}{S}\,\mathrm{DFT}_{i\Delta t\to a.\Delta\alpha}^{S}\{|X_N(i\Delta t;\,m\Delta f)|^2\},$$

où $\Delta\alpha = \frac{1}{\Delta t.S}$ est la résolution fréquentielle par rapport à la fréquence secondaire a$\Delta\alpha$. La quantité obtenue est une matrice ayant la même dimension que la TFCT mais comprenant deux variables fréquentielles d'unité Hertz.

Ensuite, en considérant k, l'entier tel que, la fréquence caractéristique de la roue d'intérêt s'écrit sous la forme: $f_I = k\Delta\alpha$, le KSS est alors obtenu de la manière suivante (étape E104) :

$$KSS_{4X}^{f_I}(m\Delta f) = \sum_{a=c.k} |\Gamma_{2X}(a\Delta\alpha;\,m\Delta f)|^2.$$

Avec c = 1,2,3 ... et tel que c < $S/2k$ - 1.

De manière complémentaire, si la fréquence $f_I$ ne coïncide pas avec la résolution fréquentielle $\Delta\alpha$, une interpolation (par exemple cubique) peut être mise en place pour effectuer la somme.

Ainsi, on obtient un KSS pour chaque fréquence d'intérêt du système 1 à surveiller.

De manière complémentaire, dans le cas où le ré-échantillonnage angulaire est effectué, le KSS être appliqué au signal angulaire $x(\theta)$ d'une façon parfaitement similaire à celle décrite pour $x(t)$.

Une fois le KSS obtenu pour chaque fréquence, un filtre optimal est estimé de la manière suivante (étape E105) :

$$H_{f_I}(m\Delta f) = \sqrt{KSS_{4X}^{f_I}(m\Delta f)}.$$

Le signal numérique est alors effectivement filtré (étape E11) au moyen de ce filtre afin de favoriser l'impulsivité associée à la fréquence de la partie suspecte du point de vue spectral du système à surveiller.

Le signal filtré, noté y(t), est alors donné par :

$$y(n\delta t) = \mathrm{IDFT}_{j\delta f\to n\delta t}^{M}\{H_{f_I}(j\delta f)\,X(j\delta f)\},$$

où $X(j\delta f)$ est la transformée de Fourier de $x(t)$ c'est-à-dire,

$$X(r\delta f) = \mathrm{DFT}_{n\delta t\to r\delta f}^{S}\{x(n\delta t)\},$$

et $\delta_f = F_s/L$ est la résolution fréquentielle.

De manière complémentaire, une étape intermédiaire d'interpolation peut être requise pour pouvoir calculer les coefficients de $H_{f_I}$ aux fréquences $j\delta f$ à partir de ceux calculés aux fréquences $m\Delta f$.

Afin de mettre en valeur la modulation induite par la roue d'intérêt, l'enveloppe carrée EC du signal filtré est calculée comme suit (étape E3)

$$EC(n\delta t) = |Hilbert\{y(n\delta t)\}|^2.$$

Comme constaté il s'agit du carré de la valeur absolue de la transformée de Hilbert du signal filtré.

L'utilisation de l'enveloppe carrée du signal est préférée à l'enveloppe seule car elle est plus efficace. En effet, cette dernière peut induire des artéfacts (des composants n'ayant pas un sens physique).

Cette étape E3 permet d'extraire une image des signaux modulants associés à la rotation des roues à partir du signal filtré à l'étape E1.

Bien que l'enveloppe carrée du signal filtré soit dominé par la modulation de la roue suspecte, des interférences provenant des autres composants de la chaine mécanique peuvent être présentes. La raison de la présence de ces interférences est le fait que le filtre issu du KSS est un filtre optimal qui préserve l'allure du signal d'intérêt (c'est-à-dire minimiser l'erreur quadratique entre le signal filtré et le signal de modulation de la roue d'intérêt).

Afin de rejeter toute interférence asynchrone, la moyenne synchrone MS est calculée (étape E4) par rapport à la période de rotation d'une roue d'intérêt (choisie parmi l'une des roues de l'engrenage). En désignant par N = $T_I/\delta t$ le nombre de point par tour de la période d'intérêt $T_I$, la moyenne synchrone s'écrit comme suit

$$MS(n\delta t) = \frac{1}{G}\sum_{g=0}^{G} EC(\bar{n}\delta t + gT_I) = \frac{1}{G}\sum_{g=0}^{G} EC((\bar{n}+gN)\delta t) \qquad 0 \le n < N$$

avec $\bar{n} = \lfloor n/N \rfloor$ est le reste de la division $n/N$ et $G = L/N$ est un entier désignant le nombre de cycles effectués par la roue d'intérêt. La moyenne synchrone est définie sur N points, étant une seule période de la roue d'intérêt.

La moyenne synchrone MS ainsi obtenue peut être utilisée en tant qu'indicateur de surveillance. Dans ce cas, il est nécessaire de pouvoir suivre son évolution au cours du temps. En d'autres termes, une référence est toujours requise pour évaluer et quantifier l'évolution du défaut.

La moyenne synchrone permet d'atténuer des composantes parasites dans l'enveloppe provenant d'autres sources mécaniques. On obtient donc un enveloppe dé-bruité présentant une image du carré du signal modulant de la roue d'intérêt.

Aussi, de préférence, on détermine (étape E5) un indicateur de défaut à partir de la moyenne synchrone normalisée par la valeur médiane de la manière suivante :

$$I(n\delta t) = \sqrt{MS(n\delta t)/median\big(MS(n\delta t)\big)} \qquad 0 \le n < N$$

La présence de la racine carrée permet à l'indicateur d'être homogène à la grandeur du signal (on rappelle que le résultat obtenu est l'enveloppe carrée).

La médiane est utilisée car elle est robuste aux valeurs aberrantes relatives à la présence potentielle d'un défaut local.

De manière complémentaire, cet indicateur est affiché (étape E6) en coordonnées polaires :

$$P(\phi) = P(2\pi n/N) = I(n\delta t) \qquad 0 \le \phi < 2\pi$$

En effet, la géométrie circulaire de l'engrenage rend la représentation polaire beaucoup plus intuitive et fournit un moyen de surveillance aisément compréhensible.

Dans un cas sans défaut, cette courbe de l'indicateur varie légèrement autour du cercle unité, contrairement au cas défectueux où la courbe se déforme significativement à l'extérieur du cercle unité.

Un tel indicateur présente l'avantage d'être comparable avec d'autres systèmes indépendamment des conditions d'acquisitions (par exemple position des capteurs). Ceci est très avantageux lorsqu'il y a plusieurs moteurs à analyser.

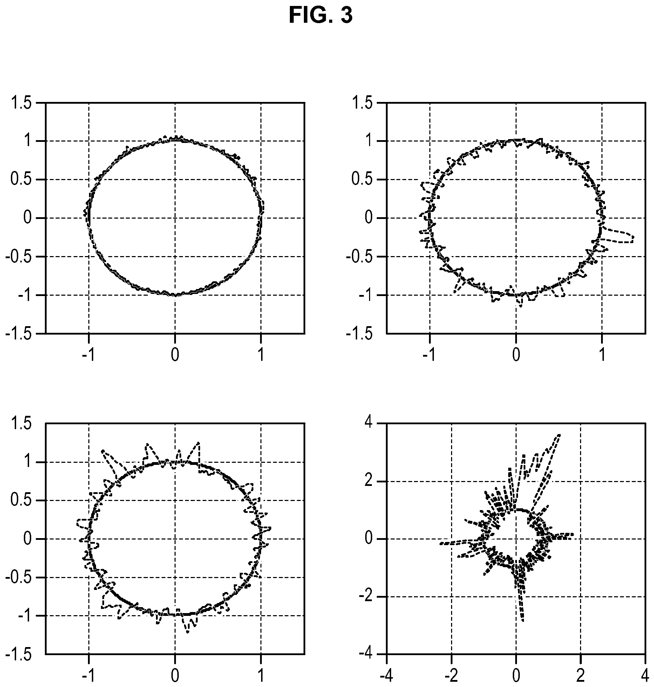

La **figure 3** illustre l'indicateur proposé appliqué sur une roue d'un réducteur dans quatre cas différents dont un comprend un défaut d'écaillage (courbe en bas à droite). La courbe en haut à gauche indique une roue parfaite, pendant que les courbes restantes (en haut à droite et en bas à gauche) indiquent des erreurs géométriques mineures bien qu'elles soient complètement saines.

**Revendications**

1. Procédé de surveillance d'un système (1) à engrenages comprenant au moins deux roues, chaque roue ayant une fréquence caractéristique ($f_1$, $f_2$), un signal vibratoire, ou acoustique représentatif de ces vibrations ayant été acquis par un capteur (21), un signal numérique vibratoire ou acoustique $x(t)$ ayant été obtenu, le procédé comprenant, pour chaque fréquence caractéristique du système (1), les étapes de

   filtrage (E1), au moyen d'un filtre, du signal numérique de manière à obtenir un signal de surveillance image d'au moins une composante vibratoire d'au moins un défaut ;
   détermination (E3) de l'enveloppe carré dudit signal de surveillance, défini par la valeur absolue au carré de la transformée de Hilbert du signal de surveillance de manière à extraire une image des signaux modulants associés à la rotation des roues à partir du signal de surveillance ;

détermination (E4) de la moyenne synchrone de ladite enveloppe carrée par rapport à la période de rotation d'une roue d'intérêt choisie parmi les roues de l'engrenage, ladite moyenne permettant d'atténuer des composantes parasites dans l'enveloppe provenant d'autres sources mécaniques ;

détermination (E5) d'un indicateur de surveillance fonction de ladite moyenne synchrone, ledit indicateur de surveillance étant défini par la racine carrée de la moyenne synchrone normalisée par la valeur médiane de la moyenne synchrone.

**2.** Procédé de surveillance selon la revendication 1, comprenant une étape d'affichage (E6) en coordonnées polaires de l'indicateur ainsi obtenu, d'un indicateur signalant au moins un défaut dès lors qu'il varie autour d'un cercle unité.

**3.** Procédé selon l'une des revendications précédentes, comprenant une étape d'obtention (E106) d'un filtre à partir d'un kurtosis spectral sélectif défini par la partie du kurtosis spectral du signal numérique liée à ladite fréquence caractéristique.

**4.** Procédé selon la revendication 3, dans lequel la détermination du kurtosis spectral sélectif du signal numérique, comprend les sous-étapes suivantes :

- détermination (E101) d'une transformée de Fourier à court terme du signal numérique définie par

$$X(i\Delta t; m\Delta f) DFT_{n\delta_t \to m\Delta f}^{N_h}\{h(n\delta_t - i\Delta t)x(n\delta_t)\}$$ $0 \le m < S$ avec $\Delta t/\delta_t = N_h(1 - \rho)$ où $p$ désigne le taux de chevauchement de la fenêtre glissante et $S = T/\Delta t$ est la longueur numérique de la transformée de Fourier à court terme par rapport à la variable $i\Delta t$ et $T$ est la durée d'acquisition du signal ;

- normalisation (E102), pour chaque fréquence $m\Delta f$ , de la transformée de Fourier à court terme obtenue de la manière suivante $$X_N(i\Delta t; m\Delta f) = \frac{X(i\Delta t; m\Delta f)}{\sigma_x(m\Delta f)}$$ , où $$\sigma_x(m\Delta f) = \sqrt{\frac{1}{S}\sum_{n=0}^{S-1}|X(i\Delta t; m\Delta f)|^2}$$ est l'écart-type de la Transformée de Fourier à court terme par rapport à la variable de temps à la fréquence $m\Delta f$.

- détermination (E103) pour chaque fréquence $m\Delta f$, de la transformée de Fourier discrète par rapport à un axe temporel

$$\Gamma_{2X}(a.\Delta\alpha; m\Delta f) = \frac{1}{S} DFT_{i\Delta t \to a.\Delta\alpha}^{S}\{|X_N(i\Delta t; m\Delta f)|^2\},$$

où $$\Delta\alpha = \frac{1}{\Delta t.S}$$ est la résolution fréquentielle par rapport à la fréquence secondaire $a\Delta\alpha$.

- détermination (E104) du kurtosis spectral sélectif au moyen de la fonctionnelle suivante :

$$KSS_{4X}^{f1}(m\Delta f) = \sum_{a=c.k} |\Gamma_{2X}(a\Delta\alpha; m\Delta f)|^2 ,$$

avec c = 1,2,3 ... et tel que c < $S/2k$ - 1,

**5.** Procédé selon l'une des revendications 3 à 4, dans lequel l'étape d'obtention (E106) du filtre est définie par la racine carrée du kurtosis spectral sélectif de la manière suivante : $$H_{f_I}(m\Delta f) = \sqrt{KSS_X^{f_I}(m\Delta f)}$$ avec $f_I$ la fréquence caractéristique considérée.

**6.** Procédé selon l'une des revendications 1 à 2, comprenant une étape d'obtention d'un filtre à partir du kurtosis spectral ou du kurtogram du signal numérique.

**7.** Procédé selon l'une des revendications précédentes, comprenant une étape (E0) de mesure et d'acquisition d'un signal vibratoire ou acoustique numérique $x(t)$, l'acquisition étant mise en oeuvre par un accéléromètre ou bien un microphone.

**8.** Procédé selon l'une des revendications précédentes, comprenant une étape (E2) de rééchantillonnage angulaire du signal numérique vibratoire ou acoustique.

**9.** Système de surveillance comprenant une unité de traitement configurée pour mettre en oeuvre un procédé selon l'une des revendications précédentes, ledit système comprenant, de préférence, une unité (1) de mesure et d'acquisition d'un signal numérique vibratoire x(t), ladite unité (1) de mesure d'acquisition comprenant un capteur (21) de préférence un accéléromètre ou un microphone.

**10.** Produit programme d'ordinateur comprenant des instructions de code de programme pour l'exécution des étapes du procédé selon l'une des revendications 1 à 8, lorsque ce procédé est exécuté par au moins un processeur.

**Patentansprüche**

**1.** Verfahren zur Überwachung eines Getriebesystems (1), umfassend mindestens zwei Räder, wobei jedes Rad eine charakteristische Frequenz ($f_1$, $f_2$) hat, wobei ein Vibrations- oder akustisches Signal, das für diese Vibrationen charakteristisch ist, von einem Sensor (21) erfasst wird, wobei ein digitales Vibrations- oder akustisches Signal $x(t)$ erhalten wird, wobei das Verfahren für jede charakteristische Frequenz des Systems (1) die Schritte umfasst

Filtern (E1), mittels eines Filters, des digitalen Signals derart, dass ein Bildüberwachungssignal von mindestens einer Vibrationskomponente von mindestens einem Fehler erhalten wird;

Bestimmen (E3) der Quadrathüllkurve des Überwachungssignals, definiert vom absoluten Wert zum Quadrat der Hilbert-Transformation des Überwachungssignals derart, dass ein Bild der modulierenden Signale, die der Rotation der Räder zugeordnet sind, aus dem Überwachungssignal abgeleitet wird;

Bestimmen (E4) des synchronen Mittels der Quadrathüllkurve im Verhältnis zur Rotationsperiode eines interessierenden Rades, ausgewählt aus den Rädern des Getriebes, wobei das Mittel erlaubt, die Störkomponenten in der Hüllkurve abzumildern, die von anderen mechanischen Quellen kommen;

Bestimmen (E5) eines Überwachungsindikators als Funktion des synchronen Mittels, wobei der Überwachungsindikator von der Quadratwurzel des vom Mittelwert des synchronen Mittels normalisierten synchronen Mittels definiert ist.

**2.** Überwachungsverfahren nach Anspruch 1, umfassend einen Schritt des Anzeigens (E6), in polaren Koordinaten, des derart erhaltenen Indikators, eines Indikators, der mindestens einen Fehler signalisiert, sobald er um einen Einheitskreis variiert.

**3.** Verfahren nach einem der vorangehenden Ansprüche, umfassend einen Schritt des Erhaltens (E106) eines Filters ausgehend von einer selektiven spektralen Kurtosis, die durch den Teil der spektralen Kurtosis des digitalen Signals definiert ist, der mit der charakteristischen Frequenz verbunden ist.

**4.** Verfahren nach Anspruch 3, wobei die Bestimmung der selektiven spektralen Kurtosis des digitalen Signals die folgenden Unterschritte umfasst:

- Bestimmen (E101) einer Kurzzeit-Fourier-Transformation des digitalen Signals, definiert durch

$$X\left(i\Delta t;\ m\Delta f\right) DFT^{N_h}_{n\delta_t \to m\Delta f}\{h(n\delta_t - i\Delta t)x(n\delta_t)\}$$

$0 \leq m < S$ mit $\Delta t/\delta_t = N_h(1 - p)$, wobei $p$ den Überschneidungsgrad des Gleitfensters bezeichnet und $S = T/\Delta t$ die digitale Länge der Kurzzeit-Fourier-Transformation im Verhältnis zu der Variablen $i\Delta t$ ist und $T$ die Dauer der Erfassung des Signals ist;

- Normalisieren (E102), für jede Frequenz $m\Delta f$, der auf folgende Weise $X_N(i\Delta t;\ m\Delta f) = \frac{X(i\Delta t; m\Delta f)}{\sigma_x(m\Delta f)}$

erhaltenen Kurzzeit-Fourier-Transformation, wobei $\sigma_x(m\Delta f) = \sqrt{\frac{1}{S}\sum_{n=0}^{S-1}|X(i\Delta t; m\Delta f)|^2}$ die Standardabweichung der Kurzzeit-Fourier-Transformation im Verhältnis zur Zeitvariablen mit der Frequenz $m\Delta f$ ist,

- Bestimmen (E103), für jede Frequenz $m\Delta f$, der diskreten Fourier-Transformation im Verhältnis zu einer Zeitachse

$$\Gamma_{2X}\,(a.\Delta\alpha; m\Delta f) = \frac{1}{S} DFT^{S}_{i\Delta t \to a.\Delta\alpha}\{|X_N(i\Delta t;\ m\Delta f)|^2\},$$

wobei $\Delta\alpha = \frac{1}{\Delta t.S}$ die Frequenzauflösung im Verhältnis zur sekundären Frequenz $\alpha\Delta\alpha$ ist.
- Bestimmen (E104) der selektiven spektralen Kurtosis mittels der folgenden Funktionalen:

$$KSS^{f1}_{4X}(m\Delta f) = \sum_{a=c.k} |\Gamma_{2X}\,(a\Delta\alpha; m\Delta f|^2$$

,

mit c = 1,2,3 ... und derart, dass *c < S/2k* - 1
ist,

5. Verfahren nach einem der Ansprüche 3 bis 4, wobei der Schritt des Erhaltens (E106) des Filters folgendermaßen

$$H_{fI}(m\Delta f) = \sqrt{KSS^{fI}_X\,(m\Delta f)}$$

von der Quadratwurzel der selektiven spektralen Kurtosis definiert ist: mit $f_1$ als entsprechende charakteristische Frequenz.

6. Verfahren nach einem der Ansprüche 1 bis 2, umfassend einen Schritt des Erhaltens eines Filters ausgehend von der spektralen Kurtosis oder von dem Kurtogramm des digitalen Signals.

7. Verfahren nach einem der vorangehenden Ansprüche, umfassend einen Schritt (E0) des Messens und des Erfassens eines digitalen Vibrations- oder akustischen Signals x(t), wobei die Erfassung von einem Beschleunigungsmesser oder von einem Mikrofon durchgeführt wird.

8. Verfahren nach einem der vorangehenden Ansprüche, umfassend einen Schritt (E2) des angularen Resamplings des digitalen Vibrations- oder akustischen Signals.

9. Überwachungssystem, umfassend eine Verarbeitungseinheit, die ausgelegt ist, um ein Verfahren nach einem der vorangehenden Ansprüche durchzuführen, wobei das System vorzugsweise eine Mess- und Erfassungseinheit (1) eines digitalen Vibrationssignals x(t) umfasst, wobei die Mess- und Erfassungseinheit (1) einen Sensor (21), vorzugsweise einen Beschleunigungsmesser oder ein Mikrofon umfasst.

10. Rechnerprogrammprodukt, umfassend Programmcodebefehle für die Ausführung der Schritte des Verfahrens nach einem der Ansprüche 1 bis 8, wenn dieses Verfahren von mindestens einem Prozessor ausgeführt wird.

**Claims**

1. A method for monitoring a gear system (1) comprising at least two wheels, each wheel having a characteristic frequency $(f_1, f_2)$, a vibratory or acoustic signal representative of these vibrations having been acquired by a sensor (21), a vibratory or acoustic digital signal *x(t)* having been obtained, the method comprising, for each characteristic frequency of the system (1), the steps of:

filtering (E1), by means of a filter, the digital signal so as to obtain an image monitoring signal of at least one vibratory component of at least one fault;
determining (E3) the square envelope of said monitoring signal, defined by the squared absolute value of the Hilbert transform of the monitoring signal so as to extract an image of the modulating signals associated with the rotation of the wheels from the monitoring signal;
determining (E4) the synchronous averaging of said square envelope relative to the period of rotation of a wheel of interest chosen among the wheels of the gear, said averaging allowing attenuating parasitic components in the envelope originating from other mechanical sources;
determining (E5) a monitoring indicator as a function of said synchronous averaging, said monitoring indicator being defined by the square root of the synchronous averaging normalized by the median value of the synchronous averaging.

2. The monitoring method according to claim 1, comprising a step of displaying (E6) in polar coordinates the thus obtained indicator, an indicator signaling at least one fault as soon as it varies around a unit circle.

3. The monitoring method according to any of the preceding claims, comprising a step of obtaining (E106) a filter from a selective spectral kurtosis defined by the part of the spectral kurtosis of the digital signal related to said characteristic frequency.

4. The monitoring method according to claim 3, wherein the determination of the selective spectral kurtosis of the digital signal comprises the following sub-steps:

   - determining (E101) a short-term Fourier transform of the digital signal defined by

   $$X(i\Delta t; m\Delta f) DFT_{n\delta_t \to m\Delta f}^{N_h} \{h(n\delta_t - i\Delta t)x(n\delta_t)\}$$

   $0 \le m$ $S$ with $\Delta t/\delta_t = N_h(1 - \rho)$ where $p$ denotes the rate of overlap of the sliding window and $S = T/\Delta t$ is the digital length of the short-term Fourier transform with respect to the variable $i\Delta t$ and $T$ is the signal acquisition time;
   - normalizing (E102), for each frequency $m\Delta f$, the short-term Fourier transform obtained as follows

   $$X_N(i\Delta t; m\Delta f) = \frac{X(i\Delta t; m\Delta f)}{\sigma_x(m\Delta f)} \quad \text{where} \quad \sigma_x(m\Delta f) = \sqrt{\frac{1}{S}\sum_{n=0}^{S-1}|X(i\Delta t; m\Delta f)|^2}$$

   is the standard deviation of the short-term Fourier transform with respect to the time variable at the frequency $m\Delta f$.
   - determining (E103) for each frequency $m\Delta f$, the discrete Fourier transform with respect to a time axis

   $$\Gamma_{2X}(a.\Delta\alpha; m\Delta f) = \frac{1}{S} DFT_{i\Delta t \to a.\Delta\alpha}^{S} \{|X_N(i\Delta t; m\Delta f)|^2\} \quad \text{, where} \quad \Delta\alpha = \frac{1}{\Delta t.S}$$

   is the frequency resolution with respect to the secondary frequency $\alpha\Delta\alpha$.
   - determining (E104) the selective spectral kurtosis by means of the following function:

   $$KSS_{4X}^{f1}(m\Delta f) = \sum_{a=c.k} |\Gamma_{2X}(a\Delta\alpha; m\Delta f|^2$$

   ,

   with c = 1,2,3 ... and such that c < $S/2k$ - **1,**

5. The monitoring method according to any of claims 3 to 4, wherein the step of obtaining (E106) the filter is defined by the square root of the selective spectral kurtosis as follows:

   $$H_{fI}(m\Delta f) = \sqrt{KSS_X^{fI}(m\Delta f)}$$

   with $f_1$ the considered characteristic frequency.

6. The monitoring method according to any of claims 1 to 2, comprising a step of obtaining a filter from the spectral kurtosis or the kurtogram of the digital signal.

7. The monitoring method according to any of the preceding claims, comprising a step (E0) of measuring and acquiring a vibratory or acoustic digital signal $x(t)$, the acquisition being implemented by an accelerometer or a microphone.

8. The monitoring method according to any of the preceding claims, comprising a step (E2) of angularly re-sampling the vibratory or acoustic digital signal.

9. A monitoring system comprising a processing unit configured to implement a method according to any of the preceding claims, said system preferably comprising a unit (1) of measuring and acquiring a vibratory digital signal x(t), said acquisition measuring unit (1) comprising a sensor (21) preferably an accelerometer or a microphone.

**10.** A computer program product comprising program code instructions for executing the steps of the method according to any of claims 1 to 8, when this method is executed by at least one processor.

# FIG. 1

# FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2963408 A

- WO 03006935 A

**Littérature non-brevet citée dans la description**

- **R. B. RANDALL.** *Machine Diagnostics using Advanced Signal Processing,* 26 Septembre 2011